# EUROPEAN PATENT APPLICATION

(11) **EP 4 163 337 A1**
(43) Date of publication of application: **12.04.2023**
(21) Application number: 21816821.9
(22) Date of filing: 02.06.2021
(51) Int. Cl.: C08L 101/00, C08K 3/017, C08K 3/10

(54) **SOFT-MAGNETIC-POWDER-CONTAINING RESIN COMPOSITION HAVING ELECTROMAGNETIC-WAVE SHIELDING PERFORMANCE AND MOLDED ARTICLE**

(30) Priority: 03.06.2020 JP 2020097135
(71) Applicant: Denka Company Limited, Tokyo 103-8338 (JP)
(72) Inventor: MIYAMA, Akira, Tokyo 103-8338 (JP); MASHIKO, Yoshihiro, Tokyo 103-8338 (JP)
(74) Representative: Gulde & Partner
(86) International application number: PCT/JP2021/021000
(87) International publication number: WO 2021/246442

(57) **Abstract**

A soft magnetic powder-containing resin composition capable of undergoing heating and melt-mold processing, and having superior shielding performance (masking performance) with respect to low frequency region electromagnetic waves of 1 MHz or lower, is provided. A soft magnetic powder-containing resin composition, including: a thermoplastic resin; and soft magnetic powder; wherein: an attenuation factor of magnetic field component measured under KEC method at a frequency of 0.3 MHz and 1 MHz using a 2.0 mm thick sheet obtained by molding the soft magnetic powder-containing resin composition are both 10 dB or more, is provided.

## Description

### TECHNICAL FIELD

The present invention relates to a soft magnetic powder-containing resin composition formulated with soft magnetic powder, the soft magnetic powder having a shielding performance to shield electromagnetic waves in low frequency region. The shielding performance suppresses electromagnetic wave noise by shielding or absorbing electromagnetic waves having a frequency of 1 MHz or lower (hereinafter frequently referred to as low frequency region electromagnetic waves) which is generated inside various electronic equipment, especially from power conversion equipment and data processing equipment installed in electrically driven vehicles. The present invention also relates to molded articles such as sheet, hose and the like.

### BACKGROUND

The unnecessary electromagnetic waves generated from various electronic equipment influence other electronic equipment and thus cause malfunction. In order to suppress such unfavorable effects of the unnecessary electromagnetic waves, a resin composition prepared by mixing and dispersing magnetic powder in rubbers and synthetic resins are processed into molded bodies such as sheet, laminated sheet, hose, shielding case, and the like, and are used as electromagnetic wave shielding molded article.

Addition of soft magnetic powder such as silicon steel, ferrite, permalloy, Sendust, and permendur as the electromagnetic wave shielding material has been suggested. It is generally known that permalloy materials show superior shielding performance with respect to electromagnetic waves having a frequency of several hundred MHz to several GHz.

Sendust is a soft magnetic material of Fe-Si-Al based alloy found in 1937. In addition, Fe-Si based alloy and Fe-Si-Cr based alloy are also known soft magnetic materials. A composition obtained by kneading and drying a mixture of such known soft magnetic material, polymer, and organic solvent has been evaluated of its shielding performance with respect to electromagnetic waves having a frequency of 300 MHz to 3 GHz. However, sufficient study has not been performed with a melt-moldable composition in terms of shielding performance with respect to low frequency region electromagnetic waves, the melt-moldable composition being prepared by adding the soft magnetic powder to a thermoplastic resin by a specific content and then subjecting the mixture under heating and melt kneading.

On the other hand, study on shielding material with respect to low frequency region electromagnetic waves having a frequency of 1 MHz or lower is very scarce. For example, Patent Literature 1 suggests a laminated body structured by forming a magnetic layer in between two or more carbon fiber reinforced resin layers, the magnetic layer formed by using a magnetic shielding coating having the soft magnetic powder dispersed in organic solvent. Patent Literature 2 suggests an electromagnetic field shielding sheet prepared by applying a soft magnetic coating onto a reticular structure followed by drying to allow the soft magnetic powder impregnated and fixed thereto.

### CITATION LIST

### PATENT LITERATURE

[Patent Literature 1] JP 6625435B
[Patent Literature 2] JP 2018-85391A

### SUMMARY OF INVENTION

### TECHNICAL PROBLEM

In the past, conventional soft magnetic material have been processed into thick plate, laminated, and used as a casing to surround the object to sufficiently shield the low frequency region electromagnetic waves having a frequency of 1 MHz or lower. However, these measures were problematic since the shielded portion would become excessively heavy. In order to achieve needs in lighter, thinner, shorter, and smaller electronic equipment and lighter electrically driven vehicles, thermoplastic resin composition capable of undergoing melt-mold processing to comply with thin and complicated shapes of components has been desired.

Accordingly, the present invention provides a soft magnetic powder-containing resin composition capable of undergoing heating and melt-mold processing and having superior shielding performance (masking performance) with respect to low frequency region electromagnetic waves of 1 MHz or lower, by mixing a predetermined amount of soft magnetic powder with thermoplastic resin. The present invention further provides a molded article of the composition.

### SOLUTION TO PROBLEM

According to the present invention, a soft magnetic powder-containing resin composition, comprising: a thermoplastic resin; and soft magnetic powder; wherein: an attenuation factor of magnetic field component measured under KEC method at a frequency of 0.3 MHz and 1 MHz using a 2.0 mm thick sheet obtained by molding the soft magnetic powder-containing resin composition are both 10 dB or more, is provided.

The resin composition of the present invention as a formulation of soft magnetic powder and thermoplastic resin, having shielding performance with respect to low frequency region electromagnetic waves, can be obtained by performing melt-kneading using known internal mixers and extruders within a suitable temperature range which allows the thermoplastic resin to be heated and melt. In addition, by using suitable dice and mold, the melt-kneaded material can be molded into sheet, hose, and other shapes.

Hereinafter, various embodiments of the present invention will be exemplified. The embodiments shown hereinafter can be combined with each other.

Preferably, in the soft magnetic powder-containing resin composition, the soft magnetic powder contains Fe-Si-Al alloy powder as main component.

Preferably, the soft magnetic powder-containing resin composition contains the Fe-Si-Al alloy powder by 20 to 80 volume%.

Preferably, in the soft magnetic powder-containing resin composition, the thermoplastic resin contains at least one selected from the group consisting of: polyethylene, polypropylene, polystyrene, ABS resin, polyvinyl chloride, polyvinylidene chloride, ethylene-vinyl acetate resin, polyurethane, acrylic resin, polycarbonate, polyamide, polyimide, polyphenylene sulfide, polyvinylidene fluoride, polytetrafluoroethylene, and polybutylene terephthalate.

According to another aspect of the present invention, a molded article obtained by heating and melt-mold processing the soft magnetic powder-containing resin composition is provided.

### EFFECT OF THE INVENTION

According to the present invention, by formulating thermoplastic resin with soft magnetic powder, a composition having superior electromagnetic waves shielding performance with respect to low frequency region electromagnetic waves and is capable of undergoing molding processing can be provided. In addition, a molded article of the composition such as sheet and hose can be provided.

### EMBODIMENTS OF THE INVENTION

Hereinafter, embodiment for carrying out the present invention will be explained in detail. Here, the embodiments explained hereinafter are only one typical embodiment of the present invention, and thus the scope of the invention shall not be interpreted narrowly.

The soft magnetic powder-containing resin composition according to one embodiment of the present invention comprises a thermoplastic resin; and soft magnetic powder; wherein an attenuation factor of magnetic field component measured under KEC method at a frequency of 0.3 MHz and 1 MHz using a 2.0 mm thick sheet obtained by molding the composition (attenuation factor of magnetic field component of electromagnetic waves measured under KEC method with respect to electromagnetic waves having a frequency of 0.3 MHz and 1 MHz using a 2.0 mm thick sheet which is the molded article of the composition) are both 10 dB or more.

The composition has superior shielding performance with respect to low frequency region electromagnetic waves of 1 MHz or lower.

The attenuation factor of magnetic field component measured under KEC method at a frequency of 0.3 MHz using a 2.0 mm thick sheet obtained by molding the composition is 10 dB or more, preferably 13 dB or more, and further preferably 15 dB or more, and even further preferably 20 dB or more.

The attenuation factor of magnetic field component measured under KEC method at a frequency of 1 MHz using a 2.0 mm thick sheet obtained by molding the composition is 10 dB or more, preferably 14 dB or more, and further preferably 15 dB or more, and even further preferably 20 dB or more.

There is no limitation regarding the soft magnetic powder so long as it has soft magnetism and can realize the afore-mentioned attenuation factor. For example, various alloy powder having soft magnetism can be mentioned.

As the various alloy having soft magnetism, for example, Fe-Si based alloy, Fe-Si-Cr based alloy, and Fe-Si-Al based alloy can be mentioned. In terms of the characteristics of frequency region which can be attenuated, the soft magnetic powder preferably contains Fe-Si-Al alloy powder, and more preferably contains Fe-Si-Al alloy powder as main component. When the Fe-Si-Al alloy powder is contained as the main component, 50 mass% or more of the soft magnetic powder is preferably the Fe-Si-Al alloy powder, and the soft magnetic powder more preferably consists essentially of the Fe-Si-Al alloy powder, and the soft magnetic powder further preferably is the Fe-Si-Al alloy powder.

Fe-Si-Al alloy is an alloy containing Fe, Si, and Al. The composition of the Fe-Si-Al alloy is preferably 3 to 12 atomic% of Si, 4 to 12 atomict of Al, and the rest being Fe. One compositional example of representative Fe-Si-Al alloy is Fe₈₅Si₁₀Al₅, Fe_{84.7}Si_{9.5}Al_{5.8}, and the like. The content of Si in the Fe-Si-Al alloy is, specifically for example, 3, 4, 5, 6, 7, 8, 9, 10, 11, or 12 atomic%, and can be in the range between the two values exemplified herein. In addition, the content of Al in the Fe-Si-Al alloy is, specifically for example, 4, 5, 6, 7, 8, 9, 10, 11, or 12 atomict, and can be in the range between the two values exemplified herein.

The shape of the soft magnetic powder can be any one of spherical, flat, and irregular, and similar shielding effect can be realized. The soft magnetic powder has a maximum diameter of 500 um, more preferably 100 um, which can be obtained by known screening procedure. Here, the maximum diameter of the powder is the maximum diameter of each particle when the shape of the powder is irregular or flat. When the maximum diameter exceeds 500 um, the electromagnetic waves shielding performance may become ununiform within the molded object, or a defective portion may occur.

The soft magnetic powder-containing resin composition contains the soft magnetic powder by 20 volume% to 80 volume%, more preferably by 30 volume% to 70 volume%. When the content of the soft magnetic powder is less than 20 volumeo, sufficient electromagnetic waves shielding performance would not be realized, and when the content exceeds 80 volume%, flowability during kneading or molding becomes insufficient, resulting in cases where desired shape cannot be molded. In addition, the kneaded product would become brittle, which is undesirable. Here, Fe-Si based alloy powder, Fe-Si-Cr based alloy powder, and other soft magnetic powder can be added by a small amount so long as it does not impair the effect of the present invention. The content of the soft magnetic powder in the soft magnetic powder-containing resin composition is, specifically for example, 20, 25, 30, 35, 40, 45, 50, 55, 60, 65, 70, 75, or 80 volume%, and can be in the range between the two values exemplified herein.

The thermoplastic resin is at least one selected among polyethylene (PE), polypropylene (PP), polystyrene (PS), ABS resin, polyvinyl chloride (PVC), polyvinylidene chloride (PVDC), ethylene-vinyl acetate resin (EVA), polyurethane (PU), acrylic resin (PMMA), polycarbonate (PC), polyamide (PA), polyimide (PI), polyphenylene sulfide (PPS), polyvinylidene fluoride (PVDF), polytetrafluoroethylene (PTFE), polybutylene terephthalate (PBT), and the like. In terms of the ability to disperse the soft magnetic powder and to obtain uniform electromagnetic waves shielding performance, ABS resin, polyvinyl chloride, ethylene-vinyl acetate resin and the like may be preferable.

So long as it does not significantly impair the electromagnetic waves shielding performance in the low frequency region, processing auxiliary and various compounding agent can be added. When the processing auxiliary is added, the processing auxiliary is added preferably by 0.1 mass% to 1 mass%, more preferably 0.3 to 0.5 mass% with respect to total sum of the thermoplastic resin and the soft magnetic powder. As the processing auxiliary, polyethylene glycol fatty acid ester and the like can be mentioned.

As the kneading method, known melt-kneader such as internal mixer and extruder can be used. As the kneading temperature and the kneading time, suitable known conditions for kneading and molding can be selected for each of the thermoplastic resin. To improve dispersibility of the soft magnetic powder, it is preferable to adopt high-speed rotation conditions and high-shear conditions to an extent that notable deterioration of thermoplastic resin and fragmentation of soft magnetic powder does not occur. Further, kneading of the soft magnetic powder can be performed by adding the soft magnetic powder with the thermoplastic resin simultaneously, or the soft magnetic powder can be added after heating and melting the thermoplastic resin or during heating and melting the thermoplastic resin (later addition). The order of addition can be arbitrarily selected in terms of improvement in dispersibility and suppression in resin deterioration.

The thermoplastic resin composition formulated with the soft magnetic powder thus obtained (molding raw material) is molded into a desired shape by using hot press or melt extruder, with suitable dice or mold. As such shape, sheet, hose, and case-shape can be mentioned for example. The molding raw material can be molded into various shapes by selecting the mold. In addition, laminated sheet can be made by using a plurality of extruders, and laminate sheet with a plurality of layers can be made by using adhesive and the like.

The molded article can be a molded member used for shielding low frequency region electromagnetic waves of various equipment. In one example, the molded article is processed into sheet as described above. Here, when the sheet is structured with a plurality of layers, the shielding effect may be enhanced even with the same thickness. In one embodiment of the present invention, high shielding effect can be expected when the sheet is structured with a plurality of layers, also. On the other hand, in the present invention, even with an embodiment in which the sheet and the like are structured with single layer, sufficient shielding effect can be achieved.

As a method for evaluating the electromagnetic wave noise shielding performance (blocking performance), KEC method developed by general foundational juridical person KEC Electronic Industry Development Center (KEC) is known. For example, this method is described in Journal of the Japan Research Association for textile end-uses (Sen-sho-shi) Vol. 40, No.2 (1999) and "https://www.kec.jp/testing-division/kec-method/". The KEC method is a method which measures the shielding effect of the electromagnetic waves generated in the near field separated into electric field component and magnetic field component. The electromagnetic waves transmitted from the transmitting antenna (transmitting jig) is received with the receiving antenna (receiving jig) via a sheet-shaped measurement sample, and the attenuated electromagnetic waves are measured to perform quantification as attenuation factor (measurement unit: dB). In the present invention, under room temperature conditions, sample with uniform thickness (2.0 mm) was used to measure the attenuation factor of the magnetic field component in the frequency range of 0.1 MHz to 1000 MHz. Here, the electromagnetic waves shielding performance (magnetic field component) with respect to frequency in the range of 1 MHz or lower, which is important in the present invention, was evaluated by comparing the measured attenuation factors for 0.3 MHz and 1 MHz.

### EXAMPLE

Hereinafter, the effect of the present invention will be explained with reference to Examples and Comparative Examples of the present invention.

### [Examples 1 to 7]

In accordance with the compositions shown in Table 1, resin composition formulated with the soft magnetic powder was prepared. As the soft magnetic powder, Fe-Si-Al alloy powder having an average particle diameter of 40 um (available from Sanyo Special Steel Co., Ltd., FME3D-AH, specific gravity of 6.9) was used. As the thermoplastic resin, EVA resin (available from Tosoh Corporation, EVA resin U-636, specific gravity of 0.94) was used. Here, in Examples 5 to 7, polyethylene glycol fatty acid ester (available from Kao Corporation, EMANON 1112) as the processing auxiliary was added by 0.3 weight% with respect to total weight of the EVA resin and Fe-Si-Al alloy powder. As the kneading machine, Labo Plastomill available from Toyo Seiki Seisaku-sho, Ltd. (60 mL capacity) was used. EVA resin and the soft magnetic powder of the present invention were charged into the kneading machine at the same time by the charging composition shown in Table 1. Kneading was performed by a rotation number of 50 rpm at 130 °C for 10 minutes to obtain the resin composition formulated with the soft magnetic powder (hereinafter simply referred to as composition). The composition was them melt-molded using a hot press set at 150 °C and a sheet mold having a thickness of 2 mm, thereby preparing a square molded sheet of 150 mm x 150 mm in length and width and 2.0 mm thickness. The electromagnetic waves shielding performance (magnetic field component) of the 2.0 mm molded sheet was measured at "general foundational juridical person KEC Electronic Industry Development Center (Seika-cho, Soraku District, Kyoto Prefecture)". The values were obtained by using the apparatus shown in Fig. 7 and sandwiching the molded sheet with a pair of magnetic field shielding effect evaluation cell (Fig. 6) as shown in "Journal of the Japan Research Association for textile end-uses (Sen-sho-shi) Vol. 40, No.2 (1999)" at the Center. Here, the applied frequency during the measurement was gradually increased ranging from 0.1 MHz to 1000 MHz. The attenuation factor (relative value) calculated from the transmitting/receiving strength value at 0.3 MHz and 1 MHz were used as the values which represent the magnetic field shielding effect of the present invention. The results are shown in Table 1.

All of the sheets obtained from the composition of the present invention showed attenuation factor of 10 dB or more, the attenuation factor calculated using measured values at frequency of 0.3 MHz and 1 MHz. Accordingly, superior electromagnetic waves shielding performance was achieved. In addition, when the formulation amount of Fe-Si-Al powder was increased from 20 volume^ to 80 volumet, the attenuation factor was improved. In particular, when the formulation amount was 40 volume^ or more, the attenuation factor showed approximately 15 dB or more. It can be understood that the resin composition has superior electromagnetic waves (magnetic field component) shielding performance.

**[Table 1]**

| | Example | | | | | | |
|---|---|---|---|---|---|---|---|
| | 1 | 2 | 3 | 4 | 5 | 6 | 7 |
| EVA resin (volume%) | 80 | 70 | 60 | 50 | 40 | 30 | 20 |
| Fe-Si-Al alloy powder (volume%) | 20 | 30 | 40 | 50 | 60 | 70 | 80 |
| polyethylene glycol fatty acid ester (weight%) | - | - | - | - | 0.3 | 0.3 | 0.3 |
| kneading machine | Labo Plastomill | Labo Plastomill | Labo Plastomill | Labo Plastomill | Labo Plastomill | Labo Plastomill | Labo Plastomill |
| sheet thickness | 2.0mm | 2.0mm | 2.0mm | 2.0mm | 2.0mm | 2.0mm | 2.0mm |
| [electromagnetic wave shielding performance (magnetic field)] | | | | | | | |
| KEC method (magnetic field) measurement value | | | | | | | |
| attenuation factor at 0.3 MHz [dB] | 13.5 | 14.8 | 160 | 17.1 | 18.5 | 20.3 | 220 |
| attenuation factor at 1 MHz [dB] | 14.7 | 16.4 | 18.0 | 19.8 | 21.6 | 24.0 | 26.5 |

### [Examples 8 to 14]

Resin composition formulated with the soft magnetic powder was prepared in a similar manner as Examples 1 to 7, except for using Fe-Si-Al alloy flat powder (available from POCO Holding Co., Ltd, average particle diameter of 55 um, flatness degree of approximately 10) as the soft magnetic powder. Accordingly, molded sheet having a thickness of 2.0 mm was obtained. The results of measurement of electromagnetic waves shielding performance (magnetic field component) performed with the 2.0 mm thick molded sheet in a similar manner as Example 1 are shown in Table 2. All of the sheets obtained from the composition of the present invention showed attenuation factor of 10 dB or more, the attenuation factor calculated using measured values at frequency of 0.3 MHz and 1 MHz. Accordingly, superior electromagnetic waves shielding performance was achieved. In addition, when the formulation amount of Fe-Si-Al powder was increased from 20 volume^ to 80 volume%, the attenuation factor was improved. In particular, when the formulation amount was 40 volume% or more, the attenuation factor showed approximately 15 dB or more. It can be understood that the resin composition has superior electromagnetic waves (magnetic field component) shielding performance.

**[Table 2]**

| | Example | | | | | | |
|---|---|---|---|---|---|---|---|
| | 8 | 9 | 10 | 11 | 12 | 13 | 14 |
| EVA resin (volume%) | 80 | 70 | 60 | 50 | 40 | 30 | 20 |
| Fe-Si-Al alloy flat powder (volume%) | 20 | 30 | 40 | 50 | 60 | 70 | 80 |
| polyethylene glycol fatty acid ester (weight%) | - | - | - | - | 0.3 | 0.3 | 0.3 |
| kneading machine | Labo Plastomill | Labo Plastomill | Labo Plastomill | Labo Plastomill | Labo Plastomill | Labo Plastomill | Labo Plastomill |
| sheet thickness | 2.0mm | 2.0mm | 2.0mm | 2.0mm | 2.0mm | 2.0mm | 2.0mm |
| [electromagnetic wave shielding performance (magnetic field)] | | | | | | | |
| KEC method (magnetic field) measurement value | | | | | | | |
| attenuation factor at 0.3 MHz [dB] | 14.1 | 15.8 | 18.0 | 20.3 | 22.9 | 25.7 | 28.8 |
| attenuation factor at 1 MHz [dB] | 14.7 | 16.4 | 188 | 21.6 | 24.5 | 26.8 | 30.1 |

### [Examples 15 to 17]

A single-screw extruder with kneading mechanism having a barrel diameter of 30 mm and L/D=16 was used. A T-die having a slit of 2 mm with 200 mm width was attached at the tip portion. The temperature of the barrel was set to 80 to 150 °C, and the rotation number was 40 rpm. A predetermined amount of EVA resin, processing auxiliary (polyethylene glycol fatty acid ester), and Fe-Si-Al alloy powder having average particle diameter of 40 um (available from Sanyo Special Steel Co., Ltd.) as the soft magnetic powder was charged, thereby obtaining a sheet-shaped molded object of the resin composition formulated with the soft magnetic powder. Subsequently, the sheet-shaped molded object was further subjected to press molding using a hot press set at 150 °C and a sheet mold having 2 mm thickness to make slight adjustments to the thickness of the molded sheet. Accordingly, a molded sheet having a thickness of 2.0 mm was finally obtained. The results obtained by measuring the electromagnetic waves shielding performance (magnetic field component) of the 2.0 mm thick molded sheet in a similar manner as Example 1 are shown in Table 3.

### [Examples 18 to 20]

In place of the single-screw extruder used in Examples 15 to 17, a twin-screw extruder having a powder feed opening located in the way of the flow along the barrel was used. The barrel had a diameter of 40 mm and L/D=20. A T-die having a slit of 2 mm with 200 mm width was attached at the tip portion. The temperature of the barrel was set to 80 to 150 °C, and the rotation number was 25 rpm. A predetermined amount of EVA resin and processing auxiliary were charged, and the soft magnetic powder was added at the intermediate position of the barrel (intermediate powder addition). Melt-kneading was performed to obtain a sheet-shaped molded object. Subsequently, the sheet-shaped molded object was further subjected to molding using a hot press set at 150 °C and a sheet mold having 2 mm thickness to make slight adjustments to the thickness of the molded sheet. Accordingly, a molded sheet having a thickness of 2.0 mm was finally obtained. The results obtained by measuring the electromagnetic waves shielding performance (magnetic field component) of the 2.0 mm thick molded sheet in a similar manner as Example 1 are shown in Table 3.

### [Example 21]

In place of the twin-screw extruder used in Example 18, a hose-shaped die having an inner diameter of 8 mm and an outer diameter of 12 mm was arranged at the tip of the extruder, and a cooling water bath was further arranged. The temperature of the barrel was set to 80 to 150 °C, and the rotation number was 25 rpm. A predetermined amount of EVA resin was charged, and the soft magnetic powder was added at the intermediate position of the barrel (intermediate powder addition). Melt-kneading was performed followed by extrusion into a hose-shape. The extruded object was introduced into the water bath for cooling to obtain a hose molded object. Subsequently, a part of the hose molded object was taken as a sample to prepare a 2.0 mm thick sheet using a hot press and a sheet mold. The results obtained by measuring the electromagnetic waves shielding performance (magnetic field component) of the sheet in a similar manner as Example 1 are shown in Table 3.

**[Table 3]**

| | Example | | | | | | |
|---|---|---|---|---|---|---|---|
| | 15 | 16 | 17 | 18 | 19 | 20 | 21 |
| EVA resin (volume%) | 70 | 60 | 50 | 70 | 60 | 50 | 70 |
| Fe-Si-Al alloy powder (volume%) | 30 | 40 | 50 | 30 | 40 | 50 | 30 |
| polyethylene glycol fatty acid ester (weight%) | 0.3 | 0.5 | 0.5 | 0.3 | 0.5 | 0.5 | 0.5 |
| molding machine | single-screw extruder | single-screw extruder | single-screw extruder | twin-screw extruder (intermediate powder addition) | twin-screw extruder (intermediate powder addition) | twin-screw extruder (intermediate powder addition) | twin-screw extruder (intermediate powder addition) |
| mold shape after extrusion | sheet | sheet | sheet | sheet | sheet | sheet | hose →partially sampled →2.0 mm sheet prepared |
| thickness | 2.0mm | 2.0mm | 2.0mm | 2.0mm | 2.0mm | 2.0mm | |
| [electromagnetic wave shielding performance (magnetic field)] | | | | | | | |
| KEC method (magnetic field) measurement value | | | | | | | |
| attenuation factor at 0.3 MHz [dB] | 14.5 | 157 | 168 | 14.3 | 15.4 | 16.1 | 16.4 |
| attenuation factor at 1 MHz [dB] | 15.6 | 17.1 | 19.4 | 15.5 | 172 | 18.9 | 20.7 |

From Examples 15 to 21, it can be understood that all of the sheets prepared from the composition of the present invention obtained by kneading using the extruder showed attenuation factor of 10 dB or more, the attenuation factor calculated using electromagnetic waves shielding performance (magnetic field component) at frequency of 0.3 MHz and 1 MHz. Accordingly, superior electromagnetic waves shielding performance was achieved. In particular, when the formulation amount was 40 volume^ or more, the attenuation factor showed 15 dB or more. It is obvious that the resin composition has superior electromagnetic waves shielding performance (magnetic field component). Further, from Example 21, it can be understood that the soft magnetism powder containing resin composition can form a hose.

### [Comparative Examples 1 to 5]

In Comparative Example 1, the Fe-Si-Al alloy powder of the present invention was not formulated. The attenuation factor was approximately 0.1 to 0.2 dB, and electromagnetic waves shielding performance was scarcely realized. The attenuation factor of Comparative Example 2 at 0.3 MHz and 1 Mz were 5 dB or lower. Therefore, it cannot be said that electromagnetic waves shielding performance was sufficiently realized. The molded object of Comparative Example 3 was extremely brittle, and thus was not able to maintain the sheet form to perform measurement under KEC method. In Comparative Example 4, ferrite powder (average particle diameter of 6 µ) was added by 50 volume^ as the soft magnetic powder. In Comparative Example 5, permalloy C powder (average particle diameter of 30 µ) containing Ni by 78wt% was added by 50 volume^ as the soft magnetic powder. It can be understood that they all showed attenuation factor of lower than 3.0 at 0.3 MHz and 1 Mz.

**[Table 4]**

| | Comparative Example | | | | |
|---|---|---|---|---|---|
| | 1 | 2 | 3 | 4 | 5 |
| EVA resin (volume%) | 100 | 90 | 10 | 50 | 50 |
| Fe-Si-Al alloy powder (volume%) | - | 10 | 90 | - | - |
| ferrite powder (volume%) | - | - | - | 50 | - |
| permalloy C powder (volume%) | - | - | - | - | 50 |
| kneading machine | Labo Plastomill | Labo Plastomill | Labo Plastomill sheet not obtained | Labo Plastomill | Labo Plastomill |
| sheet thickness | 2.0mm | 2.0mm | | 2.0mm | 2.0mm |
| [electromagnetic wave shielding performance (magnetic field)] | | | | | |
| KEC method (magnetic field) measurement value | | | | | |
| attenuation factor at 0.3 MHz [dB] | 0.1 | 3.6 | - | 0.8 | 0.5 |
| attenuation factor at 1 MHz [dB] | 0.2 | 5.0 | - | 1.8 | 2.2 |

### INDUSTRIAL APPLICABILITY

The thermoplastic resin composition formulated with the soft magnetic powder of the present invention has superior shielding performance with respect to low frequency region electromagnetic wave noise having a frequency of 1 MHz or lower and is thus extremely industrially useful. In addition, the thermoplastic resin composition is capable of undergoing heating and melt-mold processing, and is suitable as a molded member (molded article) to shield electromagnetic wave noise in the low frequency region which is generated inside various electronic equipment, and power conversion equipment and data processing equipment installed in electrically driven vehicles.

## Claims

1. A soft magnetic powder-containing resin composition, comprising:
a thermoplastic resin; and
soft magnetic powder; wherein:
an attenuation factor of magnetic field component measured under KEC method at a frequency of 0.3 MHz and 1 MHz using a 2.0 mm thick sheet obtained by molding the soft magnetic powder-containing resin composition are both 10 dB or more.

2. The soft magnetic powder-containing resin composition of Claim 1, wherein the soft magnetic powder contains Fe-Si-Al alloy powder as main component.

3. The soft magnetic powder-containing resin composition of Claim 2, wherein the Fe-Si-Al alloy powder is contained by 20 to 80 volume%.

4. The soft magnetic powder-containing resin composition of any one of Claims 1 to 3, wherein the thermoplastic resin contains at least one selected from the group consisting of: polyethylene, polypropylene, polystyrene, ABS resin, polyvinyl chloride, polyvinylidene chloride, ethylene-vinyl acetate resin, polyurethane, acrylic resin, polycarbonate, polyamide, polyimide, polyphenylene sulfide, polyvinylidene fluoride, polytetrafluoroethylene, and polybutylene terephthalate.

5. A molded article obtained by heating and melt-mold processing the soft magnetic powder-containing resin composition of any one of Claims 1 to 4.
